(19) Europäisches Patentamt
European Patent Office
Office européen des brevets

(11) EP 1 305 345 B1

(12) EUROPÄISCHE PATENTSCHRIFT

(45) Veröffentlichungstag und Bekanntmachung des Hinweises auf die Patenterteilung:
**06.10.2004 Patentblatt 2004/41**

(21) Anmeldenummer: **01965130.6**

(22) Anmeldetag: **13.07.2001**

(51) Int Cl.7: **C08C 1/07**

(86) Internationale Anmeldenummer:
**PCT/EP2001/008114**

(87) Internationale Veröffentlichungsnummer:
**WO 2002/010222 (07.02.2002 Gazette 2002/06)**

(54) **VERFAHREN ZUR AGGLOMERATION DISPERGIERTER KAUTSCHUKE**
METHOD FOR AGGLOMERATING DISPERSED RUBBER
PROCEDE POUR L'AGGLOMERATION DE CAOUTCHOUCS DISPERSES

(84) Benannte Vertragsstaaten:
**AT BE CH CY DE DK ES FI FR GB GR IE IT LI LU MC NL PT SE TR**

(30) Priorität: **28.07.2000 DE 10037280**

(43) Veröffentlichungstag der Anmeldung:
**02.05.2003 Patentblatt 2003/18**

(73) Patentinhaber: **BASF AKTIENGESELLSCHAFT**
**67056 Ludwigshafen (DE)**

(72) Erfinder:
- **DUIJZINGS, Wil**
**67065 Ludwigshafen (DE)**
- **OEPEN, Sabine**
**67158 Ellerstadt (DE)**
- **NIESSNER, Norbert**
**67159 Friedelsheim (DE)**
- **BREULMANN, Michael**
**68199 Mannheim (DE)**
- **KORB, Hardy**
**67098 Bad Dürkheim (DE)**

(56) Entgegenhaltungen:
**EP-A- 0 517 539**
**DE-A- 1 669 735**
**GB-A- 859 361**
**US-A- 3 049 501**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 305 345 B1

Printed by Jouve, 75001 PARIS (FR)

## Beschreibung

Die Erfindung betrifft ein Verfahren zur Agglomeration mindestens eines in wässriger Phase dispergierten Kautschukes (A) durch Zugabe einer wässrigen Dispersion mindestens eines Agglomerisationspolymerisates (B).

Methoden, um Kautschukpartikel zu vergrößern sind dem Fachmann bekannt. Eine Variante ist die Agglomeration (Aneinanderlagern) während der Polymerisation der kautschukbildenden Monomeren. Eine andere Methode ist die Agglomerisation des im wesentlichen auspolymerisierten dispergierten Kautschukes. Auch bei dem letzteren Verfahren besteht das Problem, daß die Dispersion neben der erwünschten Agglomeration auch Koagulat (unstabiles, weil zu großes Agglomerat) bildet. Das Koagulat beeinträchtigt die mechanischen Eigenschaften des Endproduktes. Des Weiteren verringert Koagulatbildung die Ausbeute an Produkt. Hohe Ausbeuten sind gerade bei großtechnisch betriebenen Anlagen besonders wichtig. Wenn sich Koagulat bildet, muß die Anlage darüber hinaus öfter gereinigt werden. Daher wird stets angestrebt, die Koagulatbildung so gering wie möglich zu halten.

In der EP-A 77 038 wird die Agglomerisation eines dispergierten Kautschukes in Gegenwart von einer Dispersion eines Säuregruppen enthaltenden Agglomerisationslatex und in Gegenwart eines neutralen Elektrolyten beschrieben. Da der Agglomerisationslatex freie Säuregruppen enthält, muß die Agglomerisation bei einem pH-Wert von größer 7 ausgeführt werden, um die Säure zu dissoziieren. Dieses Verfahren hat den Nachteil, daß die Effektivität der Agglomerisation, bedingt durch die freien Säuregruppen des Latex, stark durch Schwankungen des pH-Wertes beeinflußt wird. Der pH-Wert muß also um reproduzierbare Ergebnisse erhalten zu können sehr genau eingestellt sein. Dies ist in großtechnischen arbeitenden Anlagen, nur mit großem Aufwand machbar. Die als neutralen Elektrolyten vorgeschlagenen Chloride haben ferner den Nachteil, daß sie die Reaktionsbehälter korrodieren, das Abwasser belasten und selbst Reste dieser Salze bei der Verarbeitung zu Korrosionsproblemen führen. Des weiteren war aus der EP-A 517 539 bekannt, daß Kautschuke mit Emulsionspolymeren, die mindestens 30 % Einheiten mit Carbonsäuregruppen enthalten, agglomeriert werden können. Der US 3,049,501 ist eine Agglomerisationsmethode zu entnehmen, bei dem Säuregruppen enthaltender Polyvinylmethylether bei einem pH von 8 bis 11 eingesetzt wird. In der GB-A 859 361 wird ein säuregruppenfreier Agglolatex zusammen mit einem Ammoniumsalz als Elektrolyt vorgeschlagen.

Mit den in diesen Veröffentlichungen vorgeschlagenen Verfahren läßt sich die Bildung von Koagulat nicht hinreichend gut vermeiden. Außerdem kann die Verwendung flüchtiger Elektrolyte zu Problemen wie Aufschäumen der Reaktionsmischung führen.

Agglomerisationslatices, die keine freien Säuregruppen aufweisen und von sich aus, also unabhängig davon ob der pH-Wert während der Agglomerisation über 7 liegt, eine Agglomerisation bewirken können, waren ferner aus H.-G. Keppler, H. Wesslau, J. Stabenow, Angew. Makromol. Chem. 2 (1968) Seiten 1 bis 25 bekannt.

Aufgabe der vorliegenden Erfindung war es, ein Verfahren zu finden, mit dem dispergierte Kautschukpartikel effektiv gerade in großtechnischem Maßstab agglomeriert werden können, wobei die Bildung von Koagulat möglichst gering bleiben sollte.

Demgemäß wurde ein Verfahren zur Agglomeration mindestens eines in wässriger Phase dispergierten Kautschukes (A) durch Zugabe einer Dispersion mindestens eines Agglomerisationspolymerisates (B) in wässriger Phase gefunden, bei dem als B ein Agglomerisationspolymerisat verwendet wird, das im Wesentlichen keine freien Säuregruppen enthält und bei dem die Agglomerisation in Gegenwart mindestens eines basischen Elektrolyten durchgeführt wird. Außerdem wurden Pfropfpolymerisate (C) gefunden, die aus den agglomerierten Kautschuken erhältlich sind. Des Weiteren wurden thermoplastische Formmassen (D) gefunden, die die Pfropfpolymerisate C umfassen und zur Herstellung von Formkörpern, Folien oder Fasern eingesetzt werden können.

Die dem erfindungsgemäßen Verfahren zu Grunde liegenden Kautschuke A können unterschiedlichster Natur sein. Beispielsweise können Silikon-, Olefin, wie Ethylen-, Propylen-, Ethylen/Propylen-, EPDM-, Dien-, Acrylat-, Ethylenvinylacetat-, oder EthylenbutylacrlyatKautschuke oder Mischungen aus zwei oder mehr dieser Kautschuke eingesetzt werden. Bevorzugt werden allerdings Dienkautschuke verwendet. Besonders bevorzugt sind als A Dienkautschuke, die aus

a1) 50 bis 100 Gew.-% mindestens eines Diens mit konjugierten Doppelbindungen und

a2) 0 bis 50 Gew.-% von einem oder mehreren weiteren monoethylenisch ungesättigten Monomeren,

aufgebaut sind, wobei sich die Gewichtsprozente zu 100 addieren.

Als Diene mit konjugierten Doppelbindungen, a1), kommen insbesondere Butadien, Isopren und deren halogensubstituierte Derivate, etwa Chloropren, in Betracht. Bevorzugt sind Butadien oder Isopren, insbesondere Butadien.

Bei den weiteren monoethylenisch ungesättigten Monomeren a2), die auf Kosten der Monomeren a1) im Dienkautschuk A enthalten sein können, handelt es sich beispielsweise um:

vinylaromatische Monomere wie Styrol, Styrolderivate der allgemeinen Formel

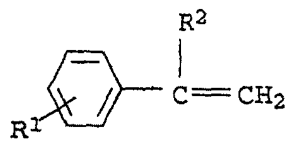

in der $R^1$ und $R^2$ unabhängig voneinander für Wasserstoff oder $C_1$bis $C_8$-Alkyl stehen;

Acrylnitril, Methacrylnitril;

$C_1$- bis $C_4$-Alkylester der Methacrylsäure oder der Acrylsäure wie Methylmethacrylat, weiterhin auch die Glycidylester, Glycidylacrylat und -methacrylat;

N-substituierte Maleinimide wie N-Methyl-, N-Phenyl- und N-Cyclohexylmaleinimid;

Acrylsäure, Methacrylsäure, weiterhin Dicarbonsäuren wie Maleinsäure, Fumarsäure und Itaconsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

ungesättigte Ether wie Vinylmethylether,

sowie Mischungen dieser Monomeren.

Bevorzugte Monomeren a2) sind Styrol, Acrylnitril, Methylmethacrylat, Glycidylacrylat, -methacrylat oder Butylacrylat.

Im Allgemeinen weisen die Dienkautschuke A eine Glasübergangstemperatur Tg von weniger als 0 °C (ermittelt nach DIN 53765) auf.

Die Herstellung der Kautschuke A ist dem Fachmann bekannt oder kann nach dem Fachmann bekannten Methoden erfolgen. So können die Dienkautschuke A in einem ersten Schritt hergestellt werden, bei dem sie nicht partikelförmig anfallen, beispielsweise via Lösungspolymerisation oder Gasphasenpolymerisation und dann in einem zweiten Schritt in der wässrigen Phase dispergiert werden (Sekundäremulgierung).

Für die Herstellung der Kautschuke A werden heterogene, partikelbildende Polymerisationsverfahren bevorzugt. Diese Dispersionspolymerisation kann z.B. in an sich bekannter Weise nach der Methode der Emulsions-, der inversen Emulsions-, Miniemulsions-, Mikroemulsions-, oder Mikrosuspensionspolymerisation durchgeführt werden.

Die Dispersionspolymerisation kann in einem organischen Lösungsmittel oder in wässriger Phase durchgeführt werden.

Bevorzugt werden die Kautschuke A in wässriger Phase hergestellt. Unter wässriger Phase sollen sowohl Lösungen, Emulsionen oder Suspensionen der entsprechenden Monomeren oder Polymeren in Wasser als auch in Lösungsmittelgemischen, die zu einem großen Teil, d.h. mindestens 20 Gew.-%, Wasser enthalten, verstanden werden.

In einer bevorzugten Ausführungsform wird die Polymerisation mittels der Emulsionsfahrweise durchgeführt, bei der die Monomeren in wäßriger Emulsion bei 20 bis 100°C, vorzugsweise bei 50 bis 80°C polymerisiert werden, wobei alle Komponenten des Ansatzes zusammengegeben werden können (Batch-Verfahren), oder das Monomer alleine bzw. eine Emulsion aus Monomerem, Wasser und Emulgatoren allmählich zu den anderen Komponenten zugegeben werden können (Zulaufverfahren). Auch eine kontinuierliche Fahrweise der Reaktion ist möglich. Bevorzugt ist das Zulaufverfahren.

Als Emulgatoren eignen sich beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze von Alkylsulfonaten oder Fettsäuren mit 10 bis 18 Kohlenstoffatomen. Ihre Menge beträgt üblicherweise von 0,5 bis 5 Gew.-%, bezogen auf die Monomeren a) (Summe der Monomeren al und a2).

Vorzugsweise verwendet man zur Herstellung der Dispersion soviel Wasser, daß die fertige Dispersion einen

Feststoffgehalt von 20 bis 50 Gew.-% hat.

Zum Starten der Polymerisationreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxodisulfate (etwa Natrium- oder Kaliumpersulfat) oder Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.

In der Regel werden die Polymerisationsinitiatoren in einer Menge von 0,1 bis 2 Gew.-%, bezogen auf die Monomeren a), eingesetzt.

Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion) sein kann.

Ferner kann man Molekulargewichtsregler wie Ethylhexylthioglycolat, n- oder t-Dodecylmercaptan oder andere Mercaptane, Terpinole und dimeres $\alpha$-Methylstyrol oder andere, zur Regelung des Molekulargewichts geeigneten Verbindungen, mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Der pH-Wert bei dem die Polymerisation durchgeführt wird, wird durch die Art der Emulgatoren, die verwendet werden beeinflußt. Im Allgemeinen wird die Polymerisation bei einem pH-Wert, der vorzugsweise bei 6 bis 10 liegt, durchgeführt. Man kann Puffersubstanzen wie $Na_2HPO_4/NaH_2PO_4$, Natriumpyrophosphat, Natriumhydrogencarbonat oder Puffer auf Basis Citronensäure/Citrat, mitverwenden. Regler und Puffersubstanzen werden in den üblichen Mengen eingesetzt, so daß sich nähere Angaben hierzu erübrigen.

Man kann die als A bevorzugten Dienkautschuke in einer besonderen Ausführungsform auch durch Polymerisation der Monomeren a) in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saatlatices bestehen beispielsweise aus Polybutadien oder Polystyrol.

In einer bevorzugten Ausführungsweise der Emulsionspolymerisation kann man die Dienkautschuke A im. Zulaufverfahren herstellen. Bei diesem Verfahren wird ein bestimmter Anteil der Monomeren a) vorgelegt und die Polymerisation gestartet, wonach man den Rest der Monomeren ("Zulaufanteil") a) als Zulauf während der Polymerisation zufügt. Die Zulaufparameter (Gestalt des Gradienten, Menge, Dauer, etc.) hängen von den anderen Polymerisationsbedingungen ab. Sinngemäß gelten auch hier die zur Zugabeweise des Radikalstarter bzw. Emulgators gemachten Ausführungen. Bevorzugt beträgt beim Zulaufverfahren der vorgelegte Anteil der Monomeren a) 5 bis 50, besonders bevorzugt 8 bis 40 Gew.-%, bezogen auf a). Bevorzugt läßt man den Zulaufanteil von a) innerhalb 1 - 18 Stunden, insbesondere 2 - 16 Stunden, ganz besonders 4 bis 12 Stunden, zulaufen.

Die inverse Emulsionspolymerisation unterscheidet sich von der Emulsionspolymerisation dadurch, daß anstelle von hydrophoben Monomeren die in einer wässrigen Phase dispergiert werden, hydrophile Monomere eingesetzt werden, die in einer im wesentlichen nicht wässrigen Phase dispergiert werden.

Die Miniemulsionspolymerisation unterscheidet sich von der Emulsionspolymerisation vor allem dadurch, daß das Gemisch aus Monomeren, Wasser, Emulgatoren und Co-Emulgatoren in einem ersten Schritt hohen Scherkräften ausgesetzt und in einem zweiten Schritt die Polymerisationsreaktion ausgeführt wird. Hierdurch werden sehr feine Monomer-Tröpfchen erzeugt. Anschließend wird mittels eines wasserlöslichen Initiators z.B. einem Persulfat polymerisiert. Die Teilchengrößenverteilung der Monomer-Tröpfchen entspricht in der Regel im Wesentlichen der späteren Teilchengrößenverteilung der Polymerpartikel. Die hohen Scherkräfte können beispielsweise durch Ultraschall oder ein Microfluidizer-Gerät erzeugt werden, oder auch durch Homogenisatoren. Einzelheiten zur Miniemulsionspolymerisation findet der Fachmann z.B. in P. Lovell, M. E1-Aasser, Emulsion Polymerization and Emulsion Polymers, Verlag John Wiley, New York, 1997, S. 699-722.

Bei der Mikroemulsionspolymerisation werden sehr hohe Emulgatormengen verwendet, wodurch sie sich von der Emulsionspolymerisation unterscheidet. Hierdurch werden, ähnlich große Monomertröpfchen erzeugt wie bei der Miniemulsionspolymerisation, die im Falle der Mikroemulsionspolymerisation allerdings thermodynamisch stabil sind.

Ansonsten gelten sowohl für die Miniemulsions- als auch die Mikroemulsionspolymerisation die zur normalen Emulsionspolymerisation gemachten Ausführungen.

Bei der Mikrosuspensionspolymerisation wird im allgemeinen in einem ersten Schritt eine feinteilige Monomeremulsion durch Einwirken hoher Scherkräfte erzeugt. Dazu verwendet man Homogenisatoren, die dem Fachmann bekannt sind. Im Vergleich zur Miniemulsionspolymerisation werden jedoch größere Tröpfchen erhalten. Des weiteren verwendet man bei der Mikrosuspensionspolymerisation mindestens einen Emulgator als auch mindestens ein Schutzkolloid.

Die für die Stabilisierung der Dispersion während der Polymerisation nach dem Mikrosuspensionspolymerisationsverfahren geeigneten Schutzkolloide sind wasserlösliche Polymere, z.B. Cellulosederivate wie Carboxymethylcellulose und Hydroxymethylcellulose, Poly-N-Vinylpyrrolidon, Polyvinylalkohol und Polyethylenoxid, anionische Polymere wie Polyacrylsäure und deren Copolymere und kationische Polymere wie Poly-N-vinylimidazol. Die Menge dieser Schutzkolloide beträgt vorzugsweise 0,1 bis 10 Gew.-%, bezogen auf die Gesamtmasse der Dispersion.

Bevorzugt werden ein oder mehrere Polyvinylalkohole als Schutzkolloid verwendet, insbesondere solche mit einem Hydrolysegrad unter 96 mol-%, besonders bevorzugt 60 bis 94 und ganz besonders bevorzugt 65 bis 92 mol-%. Die bevorzugten Polyvinylalkohole haben eine dynamische Viskosität von 2 bis 100 mPas, insbesondere von 4 bis 60 mPas, gemessen als 4 Gew.-%ige Lösung in Wasser bei 20°C nach DIN 53015.

Die Mikrosuspensionspolymerisation wird mit einem radikalischen Polymerisationsinitiator initiiert. Derartige Verbindungen sind dem Fachmann bekannt. Insbesondere werden organische Peroxide wie Dilaurylperoxid oder Azoverbindungen wie 2,2'Azobis(2-methylbutyronitril) oder 2,2'-Azobis(isobutyronitril) als Initiatoren verwendet. Ebenso werden als radikalische Polymerisationsinitiatoren Monomere verwendet, die bei erhöhter Temperatur spontan polymerisieren.

Die Menge an Initiator beträgt üblicherweise 0,05 bis 4 Gew.-%, bezogen auf die Menge der Monomeren.

Weitere Zusatzstoffe wie Puffersubstanzen und Molekulargewichtsregler können kontinuierlich oder diskontinuierlich am Anfang und/oder während der Herstellung der Monomer-Dispersion und/oder während der Polymerisation, zugefügt werden.

Die Herstellung der Monomer-Dispersion erfolgt üblicherweise bei Raumtemperatur, jedoch können je nach Art der Monomeren und Schutzkolloide auch höhere oder tiefere Temperaturen sinnvoll sein.

Die Herstellung der Monomer-Dispersion kann entweder diskontinuierlich (Batch-Fahrweise) oder kontinuierlich erfolgen. Es ist aber auch möglich, die Komponenten in einem ersten Schritt als Batch zu dispergieren und die so entstandene Dispserison danach einer zweiten kontinuierlich durchgeführten Dispersion zu unterziehen.

Die Polymerisation wird in der üblichen Weise durchgeführt, indem beispielsweise der Reaktorinhalt erwärmt wird, wodurch die Polymerisationsreaktion gestartet wird oder im Falle von Redoxinitiator durch Zusammenbringen des Initiators mit dem Reduktionsmittel. Die Polymerisationstemperatur hängt u.a. von den verwendeten Monomeren und Initiatoren und vom gewünschten Vernetzungsgrad der entstehenden Polymeren A) ab. Im allgemeinen polymerisiert man bei 30 bis 120°C, wobei auch nacheinander verschiedene Temperaturen oder ein Temperaturgradient eingestellt werden können.

Man nimmt die Polymerisationsreaktion in der Regel unter langsamem oder mäßigem Rühren vor, bei dem (im Unterschied zur vorausgehenden Emulgierung durch hohe Scherkräfte) die Tröpfchen nicht mehr weiter zerteilt werden.

Die Teilchengröße läßt sich, wie bereits oben erwähnt bei der Miniemulsions- oder der Mikrosuspensionspolymerisation demnach im wesentlichen dadurch steuern, daß die Bedingungen bei der Herstellung der Dispersion entsprechend gewählt und kontrolliert werden (z.B. Wahl des Homogenisators, Dauer des Homogenierens, Mengenverhältnisse Monomere:Wasser:Schutzkolloide, Fahrweise der Dispergierung (einfach, mehrfach, als Batch oder kontinuierlich, Kreisfahrweise), Drehzahl des Homogenisators etc.).

Die genauen Polymerisationsbedingungen, insbesondere Art, Menge und Dosierung des Emulgators und der anderen Polymerisationshilfsstoffe werden bevorzugt so gewählt, daß die erhaltenen Partikel der Kautschuke A, die mittels Emulsionspolymerisation erhalten werden, eine mittlere Teilchengröße (gewichtsmittlere Teilchengröße $d_{50}$-Wert), von üblicherweise 50 bis 500, bevorzugt 70 bis 300 und besonders bevorzugt von 80 bis 140 nm aufweisen. Die Kautschuke A, die bei der Miniemulsionspolymerisation erhalten werden, haben in der Regel Partikelgrößen von 50 bis 500 nm (gewichtsmittlere Teilchengröße $d_{50}$-Wert). Durch Mikroemulsionspolymerisation werden Teilchengrößen (gewichtsmittlere Teilchengrößen $d_{50}$-Wert) im Bereich von 20 bis 80 nm erhalten Bei den angegebenen Teilchengrößen handelt es sich jeweils um den $d_{50}$-Wert (Gewichtsmittelwert, bestimmt mittels analytischer Ultrazentrifugenmessung gemäß W. Mächtle, S. Harding (Hrg.), Analytische Ultrazentrifugation AUC in Biochemistry and Polymer Science, Cambridge, Royal Society of Chemistry UK 1992 S. 1447-1475).

Mit dem Verfahren der Mikrosuspensionspolymerisation werden im allgemeinen Teilchen einer Größe (gewichtsmittlere Teilchengröße $d_{50}$-Wert) im Bereich von 0,3 bis 10 μm erhalten. Die Teilchengrößen können über die Methode der Fraunhoferbeugung ermittelt werden (H.G. Barth, Modern Methods of Particle Size Analysis, Wiley, NY 1984).

Man polymerisiert üblicher Weise die Monomeren a) bis zu einem Umsatz von in der Regel mindestens 90, bevorzugt größer 95 %, bezogen auf die eingesetzten Monomeren.

Danach wird der in der wässrigen Phase dispergierte Kautschuk A erfindungsgemäß agglomeriert. Es können auch mehr als ein, beispielsweise zwei oder mehr, Kautschuke in der Dispersion vorliegen. Dies kann z.B. durch Mischen von Dispersionen unterschiedlicher Kautschuke erreicht werden. Die Agglomerisation wird durch Zugabe einer Dispersion des Agglomerisationspolymerisates B und des basischen Elektrolyten erreicht.

Erfindungsgemäß enthält B im wesentlichen keine freien Säuregruppen, d.h. B enthält wenn überhaupt, dann

nur freie Säuregruppen, die durch Verunreinigungen oder Nebenreaktionen bei der Herstellung von B entstanden sein könnten. Beispiele geeigneter Agglomerisationspolymerisate sind Copolymere, die polare Comonomere aufweisen. Zu den geeigneten Agglomerisationspolymerisaten zählen Copolymerisate aus $C_1$- bis $C_{12}$- Alkylacrylaten oder $C_1$- bis $C_{12}$- Methalkylacrylaten und polaren Comonomeren wie Acrylamid, Methacrylamid, Ethacrylamid, n-Butylacrylamid oder Maleinsäureamid.

Vorzugsweise werden Copolymerisate von

b1) 80 bis 99,9, bevorzugt 90 bis 99,9 Gew.-% ($C_1$-$C_4$-Alkyl)estern der Acrylsäure und

b2) 0,1 bis 20, bevorzugt 0,1 bis 10 Gew.-% Acrylamide,

wobei die Summe der Monomeren b1) und b2) 100 Gew.-% beträgt, eingesetzt. Als Monomeren b1) können Mischungen unterschiedlicher Acrylate-verwendet werden. Ethylacrylat wird als Monomer b1) bevorzugt. Zu den bevorzugten Monomeren b2) zählen Acrylamid, Methacrylamid, N-Methylolmethacrylamid oder N-Vinylpyrrolidon oder Mischungen der genannten Verbindungen. Besonders bevorzugt ist B ein Copolymerisat aus von 92 bis 99 Gew.-% Ethylacrylat und 1 bis 8 Gew.-% Methacrylamid. Zu den bevorzugten Agglomerisationspolymerisaten B zählen solche mit einem Molekulargewicht (Gewichtsmittelwert $M_w$) von 30000 bis 300000 g/mol.

Die Konzentration der Agglomerisationspolymerisate in der zur Agglomeration verwendeten Dispersion soll im allgemeinen im Bereich von 3 bis 60 , bevorzugt im Bereich von 5 bis 40 Gew.-% liegen. Die Agglomerierdispersion kann auch eine Mischung z.B. zwei oder mehr unterschiedliche Agglomerisationspolymerisate enthalten. Bevorzugt wird B in wässriger Phase dispergiert.

Bei der Agglomeration werden in der Regel von 0,1 bis 5, vorzugsweise von 0,5 bis 3 Gew.-Teile der Agglomerierdispersion auf 100 Gew.-Teile des Kautschuks, jeweils berechnet auf Feststoffe, eingesetzt.

Die Agglomerisation wird bevorzugt bei einer Temperatur von 20 bis 120°C, besonders bevorzugt von 30 bis 100 °C durchgeführt. Die Zugabe von B kann auf einmal oder portionsweise, kontinuierlich oder mit einem Zulaufprofil über einen bestimmten Zeitraum erfolgen. Nach einer bevorzugten Ausführungsform erfolgt die Zugabe von B derart, daß pro Minute 1/1 bis 1/100 der Gesamtmenge von B eingetragen werden. Die Agglomerierzeit beträgt bevorzugt von 1 Minute bis mehrere Stunden, beispielsweise bis zwei Stunden, besonders bevorzugt von 10 bis 60 Minuten.

Als basische Elektrolyte kommen erfindungsgemäß organische oder anorganische Hydroxide in Betracht. Anorganische Hydroxyde kommen vor allem in Betracht. Einwertige basische Elektrolyte werden bevorzugt. Besonders bevorzugt werden Lithiumhydroxyd, Natriumhydroxyd oder Kaliumhydroxyd eingesetzt. Nach einer der besonders bevorzugten Ausführungsformen wird KOH als basischer Elektrolyt verwendet. Nach einer anderen bevorzugten Ausführungsform wird NaOH als basischer Elektrolyt eingesetzt. Es können aber auch Mischungen aus zwei oder mehr basischen Elektrolyten eingesetzt werden. Dies kann beispielsweise dann vorteilhaft sein, wenn das Wachstum der Kautschukpartikel genau gesteuert werden soll. So kann es z.B. günstig sein, Mischungen aus LiOH mit KOH oder Mischungen aus LiOH mit NaOH einzusetzen. Mischungen aus KOH und NaOH zu verwenden ist ebenfalls möglich und zählt zu einer weiteren bevorzugten Ausführungsform.

Im allgemeinen werden die Elektrolyte vor der Zugabe gelöst. Bevorzugtes Lösungsmittel ist die wässrige Phase. Bevorzugt werden verdünnte Lösungen verwendet, z.B. Lösungen einer Konzentration im Bereich von 0,001 bis 0,1 , insbesondere von 0,001 bis 0,05, bevorzugt weniger als 0,03, beispielsweise weniger als 0,025 g basischer Elektrolyt / ml Lösungsmittel. Die Zugabe der basischen Elektrolyte kann vor der Zugabe des Agglomerisationspolymerisates, gleichzeitig zusammen oder getrennt von diesem oder nach Zugabe von B erfolgen. Es ist auch möglich die basischen Elektrolyten in der Dispersion von B vorzumischen. Nach einer bevorzugten Ausführungsform erfolgt die Zugabe der basischen Elektrolyten vor der Zugabe des Agglomerisationspolymerisates. In der Regel wird der basische Elektrolyt in einer Menge im Bereich von 0,01 bis 4 Gew.-%, bevorzugt 0,05 bis 2,5, insbesondere 0,1 bis 1,5 Gew.-%, bezogen auf den Kautschuk A (Feststoff), eingesetzt.

Der pH-Wert während der Agglomerisation beträgt im allgemeinen von 6 bis 13. Nach einer bevorzugten Ausführungsform beträgt er von 8 bis 13.

Die nach dem erfindungsgemäßen Verfahren erhaltenen agglomerierten Kautschuke A eignen sich als Pfropfgrundlage für die Herstellung von Pfropfpolymerisaten (C). Prinzipiell können die Kautschuke mit den unterschiedlichsten ungesättigten Verbindungen gepfropft werden. Entsprechende Verbindungen und Methoden sind dem Fachmann an sich bekannt. Bevorzugt werden Pfropfpolymerisate C, die (bezogen auf C und Feststoff)

c1) 30 bis 95, bevorzugt 40 bis 90, insbesondere 40 bis 85 Gew.-% Pfropfgrundlage und
c2) 5 bis 70, bevorzugt 10 bis 60, insbesondere 15 bis 60 Gew.-% einer Pfropfaufläge

enthalten.

Bevorzugt wird eine Pfropfauflage c2) aus

c21) 50 bis 100, bevorzugt 60 bis 100 und besonders bevorzugt 65 bis 100 Gew.-% einer Styrolverbindung der allgemeinen Formel

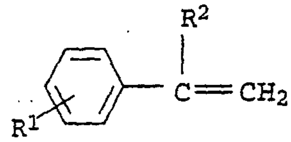

in der $R^1$ und $R^2$ unabhängig voneinander für Wasserstoff oder $C_1$-$C_8$-Alkyl stehen,

c22) 0 bis 40, bevorzugt 0 bis 38 und besonders bevorzugt 0 bis 35 Gew.-% Acrylnitril oder Methacrylnitril oder deren Mischungen,

c23) 0 bis 40, bevorzugt 0 bis 30 und besonders bevorzugt 0 bis 20 Gew.-% von einem oder mehreren weiteren monoethylenisch ungesättigten Monomeren.

Man kann die Pfropfauflage c2) in einem oder mehreren Verfahrenschritten herstellen. Dabei können die Monomeren c21), c22) und c23) einzeln oder in Mischung miteinander zugefügt werden. Das Monomerenverhältnis der Mischung kann zeitlich konstant oder ein Gradient sein. Auch Kombinationen dieser Verfahrensweisen sind möglich.

Beispielsweise kann man zunächst Styrol alleine, und danach eine Mischung aus Styrol und Acrylnitril, auf die Pfropfgrundlage c1) polymerisieren.

Es können jedoch auch andere Monomere c2) verwendet werden, beispielsweise Methylmethacrylat. Weiterhin kann die Komponente c2) auf Kosten der Monomeren c21) und c22) ein oder mehrere weitere, monoethylenisch ungesättigte Monomere c23) enthalten. Bezüglich der Monomeren c23) sei auf die Ausführungen zur Komponente a13) verwiesen.

Bevorzugte Pfropfauflagen c2) sind beispielsweise Polystyrol, und Copolymere aus Styrol und/oder a-Methylstyrol und einem oder mehreren der unter c22) und c23) genannten anderen Monomeren. Bevorzugt sind dabei Methylmethacrylat, N-Phenylmaleinimid, Maleinsäureanhydrid und Acrylnitril, besonders bevorzugt Methylmethacrylat und Acrylnitril.

Als Beispiele für bevorzugte Pfropfauflagen c2) seien genannt:

c2-1: Polystyrol
c2-2: Copolymeres aus.Styrol und Acrylnitril,
c2-3: Copolymeres aus α-Methylstyrol und Acrylnitril,
c2-4: Copolymeres aus Styrol und Methylmethacrylat.

Besonders bevorzugt beträgt der Anteil an Styrol oder α-Methylstyrol, oder der Anteil der Summe aus Styrol und α-Methylstyrol, mindestens 40 Gew.-%, bezogen auf c2).

Die Pfropfpolymerisate können zur Herstellung thermoplastischer Formmassen eingesetzt werden und werden zu diesem Zweck mit einem oder mehreren weiteren Polymeren gemischt. Dabei wirkt die Pfropfauflage c2) als Verträglichkeitsvermittler zwischen der Pfropfgrundlage c1) und dem Matrix-Polymeren, in das die Pfropfpolymerisate C eingebettet sind. Bevorzugt entsprechen daher die Monomeren c2) denen der Matrix. Besteht die Matrix ganz oder überwiegend aus einem Styrol-Acrylnitril-Copolymeren (SAN), so besteht auch die Pfropfauflage üblicherweise ganz oder überwiegend aus Styrol und/oder α-Methylstyrol und Acrylnitril. Im Allgemeinen wird die Pfropfauflage c2) in Emulsion in Gegenwart des agglomerierten Kautschuks A polymerisiert. Man arbeitet üblicherweise bei 20 bis 100°C, bevorzugt 50 bis 80°C. analog der Herstellung des Kautschuks kann die Pfropfung im Batchverfahren, im Zulaufverfahren oder kontinuierlich erfolgen.

Als Polymerisationsinitiator für die Pfropfauflage können die gleichen wasserlöslichen Verbindungen eingesetzt werden, die bei der Polymerisation der Pfropfgrundlage zum Einsatz kommen. Ebenso können öllösliche bzw. im Monomeren lösliche Initiatoren, beispielsweise Dialkylperoxide wie Dilaurylperoxyd und Dibenzylperoxid, Perester wie tert.-Butylperpivalat und tert.-Butylperoxyneodecanoat, weiterhin Di-Peroxyketale, Peroxycarbonate und Azoverbindungen wie Azodiisobutyronitril (AIBN) und Azodiisovaleronitril (ADVN) verwendet werden. Des Weiteren kommen Hydroperoxide , insbesondere Cumolhydroperoxid als Polymerisationsinitiator in Betracht.

Einzelheiten zur Durchführung der Pfropfreaktion in Emulsion findet man beispielsweise in der DE-A 24 27 960 und der EP-A 62901.

Die Bruttozusammensetzung der Pfropfpolymerisate C bleibt von den genannten Ausgestaltungen des Verfahrens unberührt.

Weiterhin eignen sich auch Pfropfpolymerisate mit mehreren "weichen" und "harten" Stufen, z.B. des Aufbaus c1)-c2)-c1)-c2) oder c2)-c1)-c2), vor allem im Falle größerer Teilchen.

Soweit bei der Pfropfung nicht gepfropfte Polymere aus den Monomeren c2) entstehen, werden diese Mengen, die in der Regel unter 10 Gew.-% von c2) liegen, der Masse der Komponente C zugeordnet.

Die Pfropfcopolymerisate C werden vorzugsweise zur Herstellung von thermoplastischen Formmassen (D) mit mindestens einem Matrixpolymeren und gegebenenfalls weiteren Komponenten gemischt. Diese sind im folgenden beschrieben:

Als Matrixpolymer d1) eignen sich z.B. amorphe Polymerisate.

Beispielsweise kann es sich um SAN (Styrol-Acrylnitril)-, AMSAN (α-Methylstyrol-Acrylnitril)-, Styrol-Maleinimid-, SMSAN(Styrol-Maleinsäure(anhydrid)-Acrylnitril-Polymerisate oder SMSA (Styrol-Maleinsäureanhydrid) handeln.

Vorzugsweise handelt es sich bei Komponente d1) um ein Copolymerisat aus

d11) 60 - 100 Gew.-%, vorzugsweise 65 - 80 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder α-Methylstyrols,

d12) 0 bis 40 Gew.-%, vorzugsweise 20 - 35 Gew.-%, Einheiten eines ethylenisch ungesättigten Monomers, vorzugsweise des Acrylnitrils oder Methacrylnitrils oder Methylmethacrylats (MMA), insbesondere des Acrylnitrils.

Gemäß einer Ausführungsform der Erfindung ist sie dabei aus 60 - 99 Gew.-% vinylaromatischen Monomeren und 1 - 40 Gew.-% mindestens eines der anderen angegebenen Monomeren aufgebaut.

Gemäß einer Ausführungsform der Erfindung wird als d1) ein Copolymerisat von Styrol und/oder α-Methylstyrol mit Acrylnitril verwendet. Der Acrylnitrilgehalt in diesen Copolymerisaten beträgt dabei 0 - 40 Gew.-%, vorzugsweise 20 - 35 Gew.-%, bezogen auf das Gesamtgewicht von d1).

Die thermoplastischen Formmassen D können des Weiteren als Matrix-Poymere zusätzlich zu d1) oder alleine vorzugsweise mindestens ein Polymeres aus der Gruppe der teilkristallinen Polyamide, teilaromatischen Copolyamide, Polyester, Polyoxyalkylene, Polycarbonate, Polyarylensulfiden und Polyetherketonen enthalten. Es können auch Mischungen aus zwei oder mehr der genannten Polymeren verwendet werden. Selbstverständlich ist es auch möglich Mischungen unterschiedlicher einzelner Polymerer z.B. Mischungen unterschiedlicher Polyamide, unterschiedlicher Polyester oder unterschiedlicher Polycarbonate als Matrix-Polymer zu verwenden.

Als Polymere d2) der erfindungsgemäßen Formmasse sind teilkristalline, bevorzugt lineare, Polyamide wie Polyamid-6, Polyamid-6,6, Polyamid-4,6, Polyamid-6,12 und teilkristalline Copolyamide (d3) auf Basis dieser Komponenten geeignet. Des Weiteren können teilkristalline Polyamide eingesetzt werden, deren Säurekomponente ganz oder teilweise aus Adipinsäure und/oder Terephthalsäure und/oder Isophthalsäure und/oder Korksäure und/oder Sebacinsäure und/oder Azelainsäure und/oder Dodecandicarbonsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip aus dem Stand der Technik bekannt sind.

Daneben können als Polymere d4) auch Polyester, vorzugsweise aromatisch-aliphatische Polyester eingesetzt werden. Beispiele sind Polyalkylenterephthalate, z.B. auf Basis von Ethylenglykol, Propandiol-1,3, Butandiol-1,4, Hexandiol-1,6 und 1,4-Bishydroxymethylcyclohexan, sowie Polyalkylennaphthalate.

Weiterhin können als Polymere d5) Polyoxyalkylene, z.B. Polyoxymethylen eingesetzt werden.

Geeignete Polycarbonate d6) sind an sich bekannt oder nach an sich bekannten Verfahren erhältlich. Bevorzugt werden Polycarbonate auf der Basis von Diphenylcarbonat und Bisphenolen. Bevorzugtes Bisphenol ist 2,2-Di (4-hydroxyphenyl)propan, im Allgemeinen - wie auch im Folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether; 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen.

Weiterhin geeignet sind die Polyarylensulfide, insbesondere das Polyphenylensulfid.

Darüber hinaus können die Formmassen C als weitere Komponente Additive E enthalten.

Als Komponente E enthalten bevorzugte thermoplastischen Formmassen 0 - 50 Gew.-%, vorzugsweise 0 - 40 Gew.-%, insbesondere 0 - 30 Gew.-% faser- oder teilchenförmige Füllstoffe oder deren Mischungen, jeweils bezogen auf die gesamte Formmasse.

Verstärkungsmittel wie Kohlenstofffasern und Glasfasern werden, sofern sie eingesetzt werden, üblicherweise in Mengen von 5 - 50 Gew.-% verwendet, bezogen auf die gesamte Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 im. Es können sowohl Endlosfasern (rovings) als auch Schnittglasfasern (staple) mit einer Länge von 1 - 10 µm, vorzugsweise 3 - 6 µm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken, z.B. Aluminiumflocken, Metallpulver, Metallfasern, metallbeschichtete Füllstoffe z.B. nickelbeschichtete Glasfasern sowie andere Zuschlagstoffe, die elektromagnetische Wellen abschirmen, den Formmassen D beigemischt werden. Ferner können die Formmassen mit zusätzlichen Kohlenstofffasern, Ruß, insbesondere Leitfähigkeitsruß, oder nickelbeschichteten C-Fasern vermischt werden.

Die Formmassen D können ferner weitere Zusatzstoffe enthalten. Als solche seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere Schmier- oder Gleitmittel, die für die Herstellung von Formkörpern bzw. Formteilen oder Folien zweckmäßig sind. Das Eindosieren dieser weiteren Zusatzstoffe kann in jedem Stadium des Herstellungsprozesses von D erfolgen, vorzugsweise jedoch zu einem frühen Zeitpunkt, um frühzeitig die Stabilisierungseffekte (oder anderen speziellen Effekte) des jeweiligen Zusatzstoffes auszunutzen.

Geeignete Stabilisatoren sind beispielsweise gehinderte Phenole, aber auch Vitamin E bzw. analog aufgebaute Verbindungen, wie auch butylierte Kondensationsprodukte von p-Kresol und Dicyclopentadien. Auch HALS-Stabilisatoren (Hindered Amine Light Stabilizers), Benzophenone, Resorcine, Salicylate, Benzotriazole. Andere geeignete Verbindungen sind z.B. Thiocarbonsäureester. Bevorzugt sind $C_6$-$C_{20}$-Fettsäureester der Thiopropionsäure, besonders bevorzugt Stearylester und Laurylester. Ganz besonders bevorzugt verwendet man Thiodipropionsäuredilaurylester (Dilaurylthiodipropionat), Thiodipropionsäuredistearylester (Distearylthiodipropionat) oder deren Mischungen. Weitere Additive sind beispielsweise HALS-Absorber, wie Bis(2,2,6,6-tetramethyl-4-piperidyl)sebazat) oder UV-Absorber wie 2H-Benzotriazol-2-yl(-4-methylphenol). Derartige Additive werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester, Amidwachse (Bisstearylamid), Polyolefinwachse bzw. allgemein höhere Fettsäuren, deren Derivate und entsprechende Fettsäuregemische mit 12 bis 30 Kohlenstoffatomen. Die Mengen dieser Zusätze liegen im Bereich von 0,05 bis 5 Gew.-%.

Auch Siliconöle, oligomeres Isobutylen oder ähnliche Stoffe kommen als Zusatzstoffe in Betracht. Die üblichen Mengen, falls verwendet, betragen von 0,001 bis 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar. Verarbeitungshilfsmittel und Stabilisatoren wie UV-Stabilisatoren, Schmiermittel und Antistatika werden, falls eingesetzt, üblicherweise in Mengen von 0,01 bis 5 Gew.-% verwendet, bezogen auf die gesamte Formmasse.

Das Mischen der Pfropfpolymerisate C mit den anderen Bestandteilen zu den Formmassen D kann nach jeder beliebigen Weise nach allen bekannten Methoden erfolgen. Vorzugsweise erfolgt jedoch das Abmischen der Komponenten durch gemeinsames Extrudieren, Kneten oder Verwalzen der Komponenten, z. B. bei Temperaturen im Bereich von 180 bis 400°C, wobei die Komponenten, sofern erforderlich, zuvor aus der bei der Polymerisation erhaltenen Lösung oder wäßrigen Dispersion isoliert worden sind. Die in wäßriger Dispersion erhaltenen Produkte der Pfropfcopolymerisation (Komponente C) können z.B. auch nur teilweise entwässert werden und als feuchte Krümel mit den Matrix-Poymeren vermischt werden, wobei dann während des Vermischens die vollständige Trocknung der Pfropfcopolymerisate erfolgt.

Die Formmassen können zu Formkörpern, Folien oder Fasern verarbeitet werden.

Diese können gemäß einer Ausführungsfofm der Erfindung nach den bekannten Verfahren der Thermoplastverarbeitung aus den Formmassen D hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen.

Die aus den Formmassen D hergestellten Formteile zeichnen sich durch höhere Schlagzähigkeiten aus. Außerdem weisen sie eine verbesserte Oberflächenqualität auf, insbesondere einen höheren Glanz.

Die Erfindung wird nachstehend anhand von Beispielen näher erläutert.

Beispiele

Untersuchungsmethoden:

Charpy-Kerbschlagzähigkeit (ak [kJ/m$^2$]):

An Probekörpern (80 X 10 X 4 mm, hergestellt nach ISO 294 in einem Familienwerkzeug, bei einer Massetemperatur von 240 °C und einer Werkzeug temperatur von 50 °C), geprüft bei 23 °C bzw. -40 °C nach ISO 179-2/1eA (F).

Durchstoß (multiaxiale Zähigkeit) [Nm] :

An Plättchen (60 x 60 x 2 mm, hergestellt nach ISO 294 in einem Familienwerkzeug, bei einer Massetemperatur von 240°C und einer Werkzeugtemperatur von 50°C), geprüft nach ISO 6603-2

Fließfähigkeit (MVR [ml/10']):

An der Polymerschmelze bei 220°C und 10 kg Belastung nach ISO 1133 B

Elastizität (E-Modul [MPa]):

An Prüfkörpern (hergestellt nach ISO 294 bei einer Massetemperatur von 250 °C und einer Werkzeugtemperatur von 60°C), geprüft nach ISO 527-2/1A/50

Koagulatmenge:

Es wird die Menge an Koagulat bezogen auf den Pfropfkautschuk nach Filtration über ein Sieb mit einer Maschenweite von ca. 1 mm bestimmt, welches 17 Stunden bei 80°C und unter Stickstoff (200 mbar) getrocknet wurde.

Teilchengröße:

Bei der Angabe der mittleren Teilchengröße d handelt es sich um das Gewichtsmittel der Teilchengröße, wie sie mittels einer analytischen Ultrazentrifuge entsprechend der Methode von W.
Mächtle, S. Harding (Hrg.), Analytische Ultrazentrifuge (AUC) in Biochemistry and Polymer Science, Royal Society of Chemistry Cambridge, UK 1992 S. 1447-1475, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der gewichtsmittlere Teilchendurchmesser $d_{50}$ gibt denjenigen Teilchendurchmesser an, bei dem 50 Gew.-% aller Teilchen einen größeren und 50 Gew.-% einen kleineren Teilchendurchmesser aufweisen.

Quellungsindex und Gelgehalt [%]

Aus der wässrigen Dispersion der Pfropfgrundlage wurde durch Verdampfen des Wassers ein Film hergestellt. 0,2 g dieses Films wurden mit 50 g Toluol versetzt. Nach 24 Stunden wurde das Toluol von der auf gequollenen Probe abgesaugt und die Probe ausgewogen. Nach 16 Stunden Trocknen der Probe im Vakuum bei 110°C wurde erneut ausgewogen. Es wurden berechnet:

$$\text{Quellungsindex QI} = \frac{\text{Masse der aufgequollenen, abgesaugten Probe}}{\text{Masse der im Vakuum getrockneten Probe}}$$

$$\text{Gelgehalt} = \frac{\text{Masse der im Vakuum getrockneten Probe}}{\text{Einwaage der Probe vor der Quellung}} \cdot 100\ \%$$

Butadienkautschuk ($A_1$ bis $A_5$)

Die Herstellung der Butadienkautschuk ($A_1$ bis $A_5$) erfolgte durch Emulsionspolymerisation nach dem Zulaufverfahren. Als Comonomer wurden 10 Gew.-% Styrol verwendet.

Die Butadienkautschuke hatte folgende Eigenschaften:

| Kautschuk | Quellungsindex | Gelgehalt [%] | $d_{50}$-Wert [nm] |
|---|---|---|---|
| $A_1$ | 19 | 77 | 109 |
| $A_2$ | 28 | 74 | 100 |
| $A_3$ | 17 | 86 | 116 |
| $A_4$ | 22 | 76 | 104 |
| $A_5$ | 28 | 72 | 106 |

Versuch a (Zum Vergleich)

60,47 kg einer Dispersion von $A_1$ in Wasser (Feststoffgehalt 43 Gew.-%) wurden bei 55 °C mit 6,5 kg einer Dispersion des Copolymerisates $B_1$ (Feststoffgehalt 10 Gew.-%, Zusammensetzung $B_1$: 95,5 % Ethylacrylat/4,5 % Methacrylamid (MAM)) versetzt.

Die so erhaltene Dispersion des agglomerierten Kautschuk $A_1$ wurde mit Emulgator versetzt. Anschließend wurden 0,98 kg Acrylnitril (AN), 2,52 kg Styrol (S) und t-Dodecylmercaptan (Regler) zugegeben. Als Initiatorsystem wurde eines auf der Basis von Cumolhydroperoxid und Dextrose verwendet und bei einer Temperatur im Bereich von ca. 60 bis ca. 70 °C polymerisiert. Anschließend wurden weitere 2,94 kg Acrylnitril, 7,56 kg Styrol und Regler sowie Emulgator und Initiator zugegeben. Nach Beendigung der Polymerisationsreaktion gab man 0,05 % Siliconöl sowie 0,6 % einer Stabilisatormischung, jeweils bezogen auf den Gesamtfeststoffgehalt, hinzu und ließ abkühlen.

Die Dispersion wurde mittels Magnesiumsulfatlösung gefällt. Der so erhaltene Pfropfkautschuk $C_{V1}$ wurde isoliert und mit Poly(styrol-co-acrylnitril) (SAN) mit einem Acrylnitrilgehalt von 24 Gew.-% durch Extrusion zu einer Formmasse $D_{V1}$ mit einem Gehalt von 29 Gew.-% $C_{V1}$ verarbeitet.

Versuch b (Erfindungsgemäß)

Es wurde analog zu Versuch a vorgegangen, wobei die Dispersion des Kautschuks vor der Zugabe des Copolymerisates $B_1$ mit 0,27 Gew.-% KOH bezogen auf den Feststoffanteil der Dispersion von $A_2$ versetzt wurde.

Die so erhaltene Dispersion wurde mittels Magnesiumsulfatlösung gefällt. Der so erhaltene Pfropfkautschuk $C_1$ wurde isoliert und mit SAN mit einem Acrylnitrilgehalt von 24 Gew.-% durch Extrusion zu einer Formmasse $D_1$ mit einem Gehalt von 29 Gew.-% $C_1$ verarbeitet.

Versuch c (Erfindungsgemäß)

4727,3 g der Dispersion von $A_3$ in Wasser (Feststoffgehalt 44 Gew.-%) wurden mit 11,2 g einer 10 Gew.-%igen KOH-Lösung versetzt. Der Anteil an KOH-Feststoff betrug 0,054 Gew.-% bezogen auf den Feststoffanteil der Dispersion von $A_3$. Danach wurde auf 55°C aufgeheizt. Anschließend gab man eine 10 Gew.-%ige Dispersion des Copolymerisates $B_1$ zu, wobei die zugegebene Feststoffmenge dieser Agglomerierdispersion 2,5 % des Feststoffanteils der Polybutadiendispersion betrug.

Anschließend gab man 14,4 g einer 10 Gew.-%igen KOH-Lösung, Emulgator sowie Wasser hinzu und rührte einige Minuten nach.

Anschließend gab man 78,4 g Acrylnitril, 201,6 g Styrol und t-Dodecylmercaptan zu. Die Reaktionsmischung wurde aufgeheizt, mit einem Initiatorsystem auf der Basis von Cumolhydroperoxid und Dextrose versetzt und bei ca. 70 °C polymerisiert. Anschließend wurden weitere 235,2 g Acrylnitril, 604,8 kg Styrol und Regler sowie Emulgator, Initiator und Wasser sowie 3,84 g einer 10 Gew.-%igen Lösung von KOH in Wasser zugegeben. Nach Beendigung der Polymerisationsreaktion gab man 0,05 % Siliconöl sowie 0,6 % einer Stabilisatormischung, jeweils bezogen auf den Gesamtfeststoffgehalt, hinzu und ließ abkühlen.

Die Dispersion wurde mittels Magnesiumsulfatlösung gefällt. Der so erhaltene Pfropfkautschuk $C_2$ wurde isoliert und mit SAN mit einem Acrylnitrilgehalt von 28 Gew.-% durch Extrusion zu einer Formmasse $D_2$ mit einem Gehalt von 29 Gew.-% $C_2$ verarbeitet.

Versuch d (Erfindungsgemäß)

Es wurde analog zu Versuch c vorgegangen, wobei die Dispersion des Kautschuks vor' der Zugabe des Copolymerisates $B_1$ mit 0,11 Gew.-% KOH bezogen auf den Feststoffanteil der Dispersion von $A_3$ versetzt wurde.

Die so erhaltene Dispersion wurde mittels Magnesiumsulfatlösung gefällt. Der so erhaltene Pfropfkautschuk

$C_3$ wurde isoliert und mit SAN mit einem Acrylnitrilgehalt von 28 Gew.-% durch Extrusion zu einer Formmasse $D_3$ mit einem Gehalt von 29 Gew.-% $C_3$ verarbeitet.

Versuch e (Erfindungsgemäß)

Es wurde analog zu Versuch c vorgegangen, wobei die Dispersion des Kautschuks vor der Zugabe des Copolymerisates $B_1$ mit 0,27 Gew.-% KOH, bezogen auf den Feststoffanteil der Dispersion von $A_3$ versetzt wurde.

Die Dispersion wurde mittels Magnesiumsulfatlösung gefällt. Der so erhaltene Pfropfkautschuk $C_4$ wurde isoliert und mit SAN mit einem Acrylnitrilgehalt von 28 Gew.-% durch Extrusion zu einer Formmasse $D_4$ mit einem Gehalt von 29 Gew.-% $C_4$ verarbeitet.

Versuch f (Zum Vergleich)

4952,4 g einer Dispersion $A_2$ (Feststoffgehalt 42 Gew.-%) in Wasser wurden bei ca 70 °C mit einer 10 Gew.-%igen Agglomerierdispersion von $B_2$ (Zusammensetzung $B_2$: 96 % Ethylacrylat/4 % MAM) versetzt, wobei die zugegebene Feststoffmenge der Agglomerierdispersion 4 % des Feststoffanteils der Polybutadiendispersion betrug.

Nach der Agglomerisation wurden Emulgator und Initiator (Kaliumpersulfat) zugegeben. Anschließend wurden 46,67 g Acrylnitril, 140 g Styrol und Regler zugegeben. Danach gab man ein Gemisch von 233,33 g Acrylnitril, 700 g Styrol und Regler innerhalb von 190 Minuten zu, wobei die Temperatur nach über der Hälfte der Zeit auf 77 °C erhöht wurde. Nach Ende des Monomerzulaufs wurde nochmals Initiator zugegeben und nachpolymerisiert.

Die Dispersion wurde mit 0,02 Gew.-% Siliconöl sowie 0,2 Gew.-% eines Stabilisators, jeweils bezogen auf den Gesamtfeststoffgehalt, versetzt und abgekühlt.

Die Dispersion wurde mittels Magnesiumsulfatlösung gefällt. Der so erhaltene Pfropfkautschuk $C_{V2}$ wurde isoliert und mit SAN mit einem Acrylnitrilgehalt von 24 Gew.-% durch Extrusion zu einer Formmasse $D_{V2}$ mit einem Gehalt von 29 Gew.-% $C_{V2}$ verarbeitet.

Versuch g (Erfindungsgemäß)

Es wurde analog zu Versuch f vorgegangen, wobei zusätzlich 0,54 % KOH, bezogen auf den Feststoffgehalt der Polybutadiendispersion, zugegeben wurden.

Die Dispersion wurde mittels Magnesiumsulfatlösung gefällt. Der so erhaltene Pfropfkautschuk $C_5$ wurde isoliert und mit SAN mit einem Acrylnitrilgehalt von 24 Gew.-% durch Extrusion zu einer ABS-Formmasse $D_5$ mit einem Gehalt von 29 Gew.-% $C_5$ verarbeitet.

Versuch h (Erfindungsgemäß)

Es wurde analog zu Versuch f vorgegangen, wobei zusätzlich 0,27 % KOH, bezogen auf den Feststoffgehalt der Polybutadiendispersion, zugegeben wurden. Die zugegebene Feststoffmenge der Agglomerierdispersion betrug 2,5 % des Feststoffanteils der Polybutadiendispersion.

Die Dispersion wurde mittels Magnesiumsulfatlösung gefällt. Der so erhaltene Pfropfkautschuk $C_6$ wurde isoliert und mit SAN mit einem Acrylnitrilgehalt von 24 Gew.-% durch Extrusion zu einer Formmasse $D_6$ mit einem Gehalt von 29 Gew.-% $C_6$ verarbeitet.

Versuch i (Erfindungsgemäß)

Es wurde analog zu Versuch f vorgegangen, wobei zusätzlich 0,27 % KOH, bezogen auf den Feststoffgehalt der Polybutadiendispersion, zugegeben wurden. Die zugegebene Feststoffmenge der Agglomerierdispersion von $B_3$ ($B_3$: Zusammensetzung 94 % Ethylacrylat/6 % MAM) betrug 2,5 % des Feststoffanteils der Polybutadiendispersion. Die Dispersion wurde mittels Magnesiumsulfatlösung gefällt. Der so erhaltene Pfropfkautschuk $C_7$ wurde isoliert und mit SAN mit einem Acrylnitrilgehalt von 24 Gew.-% durch Extrusion zu einer Formmasse $D_7$ mit einem Gehalt von 29 Gew.-% $C_7$ verarbeitet.

Versuch j (Erfindungsgemäß)

5580 g einer Dispersion $A_4$ (Feststoffgehalt 40 Gew.-%) in Wasser wurden bei ca 70 °C mit 0,37 gew.-%ige KOH, bezogen auf den Feststoffgehalt der Dispersion von $A_4$, versetzt. Anschließend gab man eine 10 Gew.-%igen Agglomerierdispersion von $B_2$ (Zusammensetzung $B_2$: 95,5 % Ethylacrylat/4,5 % MAM) hinzu, wobei die zugegebene Feststoffmenge der Agglomerierdispersion 1,5 % des Feststoffanteils der Polybutadiendispersion betrug.

Nach der Agglomerisation wurden Emulgator und Initiator (Kaliumpersulfat) zugegeben. Anschließend wurden 47,9 g Acrylnitril und 180 g Styrol zugegeben. Danach gab man ein Gemisch von 239 g Acrylnitril, 900 g Styrol innerhalb von 190 Minuten zu, wobei die Temperatur nach über der Hälfte der Zeit auf 77 °C erhöht wurde. Nach Ende des Monomerzulaufs wurde nochmals Initiator zugegeben und nachpolymerisiert.
Die Dispersion wurde mit 0,2 Gew.-% eines Stabilisators, bezogen auf den Gesamtfeststoffgehalt, versetzt und abgekühlt.
Die Dispersion wurde mittels Magnesiumsulfatlösung gefällt. Der so erhaltene Pfropfkautschuk $C_8$ wurde isoliert und mit SAN mit einem Acrylnitrilgehalt von 24 Gew.-% durch Extrusion zu einer Formmasse $D_8$ mit einem Gehalt von 29 Gew.-% $C_8$ verarbeitet.

Versuch k (Erfindungsgemäß bzw. zum Vergleich)

Es wurde analgog zu Versuch j vorgegangen, wobei zusätzlich die in der Tabelle 4 angegebene Art und Menge Elektrolyt, bezogen auf den Feststoffgehalt der Polybutadiendispersion, zugegeben wurde.
Die Dispersion wurde mittels Magnesiumsulfatlösung gefällt. Der jeweils erhaltene Pfropfkautschuk $C_9$ bis $C_{11}$ bzw. $C_{v3}$ bis $C_{v7}$ wurde isoliert und mit SAN mit einem Acrylnitrilgehalt von 24 Gew.-% durch Extrusion zu einer ABS-Formmasse $D_9$ bis $D_{11}$ bis $D_{v3}$ bis $D_{v7}$ mit einem Gehalt von 29 Gew.-% $C_9$ bis $C_{11}$ bzw. $C_{v3}$ bis $C_{v7}$ verarbeitet.

Versuch 1 (Erfindungsgemäß bzw. zum Vergleich)

Es wurde analog zu Versuch j vorgegangen. Als Kautschuk wurde der Kautschuk $A_5$ eingesetzt.
Als Agglomerisationspolymerisat wurde das Copolymerisat $B_1$ eingesetzt. Zum Vergleich wurden die Copolymerisate $B_{v1}$ bis $B_{v4}$ verwendet, die Acrylsäure bzw. Methacrylsäuregruppen enthalten und wie folgt hergestellt wurden:

Herstellung von $B_1$
333 g Ethylacrylat, Wasser, Emulgator und Kaliumpersulfat wurden vorgelegt, auf einen pH-Wert von 8 bis 9 eingestellt und bei 80°C gerührt. Anschließend wurden weitere 2681 g Ethylacrylat, 126 g Methacrylamid, Emulgator, Wasser und Radikalstarter zudosiert. Nach ca. 4 1/2 Stunden wurde die Reaktionsmischung auf Raumtemperatur abgekühlt und die so erhaltene Dispersion mit Wasser auf 10 Gew.-% verdünnt.

Herstellung von $B_{v1}$
Es wurde wie unter $B_1$ beschrieben vorgegangen, jedoch wurden 360 g Ethylacrylat vorgelegt, 2905 g Ethylacrylat zudosiert und anstelle von Methylacrylat 136 g Acrylsäure zudosoiert.
Nach Abkühlen der Reaktionsmischung auf Raumtemperatur wurde die Dispersion mit einer wässrigen KOH-Lösung, die bezogen auf die Acrylsäure eine equimolare Menge KOH enthielt, auf 10 Gew.-% verdünnt.

Herstellung von $B_{v2}$
Es wurde wie unter $B_{v1}$ beschrieben vorgegangen, jedoch wurde anstelle von Acrylsäure Methacrylsäure eingesetzt.

Herstellung von $B_{v3}$
Es wurde wie unter $B_{v1}$ beschrieben vorgegangen, wobei die Dispersion anstelle mit wässriger KOH-Lösung mit Wasser auf 10 Gew.-% verdünnt wurde.

Herstellung von $B_{v4}$
Es wurde wie unter $B_{v2}$ beschrieben vorgegangen, wobei die Dispersion anstelle mit wässriger KOH-Lösung mit Wasser auf 10 Gew.-% verdünnt wurde.

Bei der Anwendung von $B_{v3}$ und $B_{v4}$ wurde zusätzlich zu der in Tabelle 5 angegebenen Menge KOH eine auf Acrylsäure bzw. Methacrylsäure bezogen equimolare Menge KOH zugegeben.
Die Ergebnisse der Versuche sind in Tabelle 5 zusammengestellt.

Tabelle 1

| | Zum Vergleich | Erfindungsgemäß |
|---|---|---|
| Versuch | a | b |

Tabelle 1 (fortgesetzt)

| | Zum Vergleich | Erfindungsgemäß |
|---|---|---|
| Kautschuk A | $A_1$ | $A_2$ |
| Verhältnis AN/S in C | 28/72 ($C_{v1}$) | 28/72 ($C_1$) |
| MAM Gehalt [%] in $B_1$ | 4,5 | 4,5 |
| Menge [%] $B_1$ | 2,5 | 2,5 |
| Elektrolyt | ohne | KOH |
| Menge Elektrolyt [%] | | 0,27 |
| Initiator | Redox | Redox |
| pH (nach Pfropfung) | 9,58 | 9,92 |
| Teilchengröße von C $d_{50}$ [nm] | 238 | 369 |
| AN Gehalt in SAN [%] | 24 | 24 |
| ak (23 °C) [kJ/m$^2$] | 13,6 | 19,7 |
| ak (-40 °C) [kJ/m$^2$] | 4 | 9,1 |
| Durchstoß [nm] | 23,6 | 21,2 |
| MVR (220/10) [cm$^3$/10 min] | 16,4 | 17,7 |
| E-Modul [MPa] | 2080 | 2040 |
| Koagulat [%] | 1,2 | 0,3 |

Tabelle 2

| | Erfindungsgemäß | Erfindungsgemäß | Erfindungsgemäß |
|---|---|---|---|
| Versuch | c | d | e |
| Kautschuk A | $A_3$ | $A_3$ | $A_3$ |
| Verhältnis AN/S in C | 28/72 ($C_2$) | 28/72 ($C_3$) | 28/72 ($C_4$) |
| MAM Gehalt [%] in B | 4,5 | 4,5 | 4,5 |
| Menge [%] von B | 2,5 | 2,5 | 2,5 |
| Elektrolyt | KOH | KOH | KOH |
| Menge Elektrolyt [%] | 0,054 | 0,11 | 0,27 |
| Initiator | Redox | Redox | Redox |
| pH (nach Pfropfung) | 9,82 | 9,97 | 10,28 |
| Teilchengröße von C $d_{50}$ [nm] | 151 | 267 | 325 |
| AN Gehalt in SAN [%] | 28 | 28 | 28 |
| ak (23 °C) [kJ/m$^2$] | 22,2 | 20,7 | 21,3 |
| ak (-40 °C) [kJ/m$^2$] | 7,6 | 7,6 | 7,8 |
| Durchstoß [Nm] | 27,8 | 25,9 | 26,4 |
| MVR (220/10) [cm$^3$/10 min] | 20,5 | 19,5 | 18,7 |
| E-Modul [MPa] | 2230 | 2210 | 2170 |
| Koagulat [%] | 0,15 | 0,15 | 0,075 |

Tabelle 3

| | Zum Vergleich | Erfindungsgemäß | Erfindungsgemäß | Erfindungsgemäß |
|---|---|---|---|---|
| Versuch | f | g | h | i |
| Kautschuk A | $A_2$ | $A_2$ | $A_2$ | $A_2$ |
| Verhältnis AN/S in C | 25/75($C_{v2}$) | 25/75($C_5$)) | 25/75($C_6$) | 25/75($C_7$) |
| MAM Gehalt [%] in B | 4 | 4 | 4 | 6 |
| Menge [%] von B | 4 | 4 | 2,5 | 2,5 |
| Elektrolyt | ohne | KOH | KOH | KOH |

Tabelle 3 (fortgesetzt)

| | Zum Vergleich | Erfindungsgemäß | Erfindungsgemäß | Erfindungsgemäß |
|---|---|---|---|---|
| Menge Elektrolyt [%] | | 0,54 | 0,27 | 0,27 |
| Initiator | KPS | KPS | KPS | KPS |
| Teilchengröße von C $d_{50}$ [nm] | 207 | 350 | 358 | 362 |
| pH (nach Pfropfung) | 8,87 | 10,58 | 10,23 | 10,10 |
| AN Gehalt in SAN [%] | 24 | 24 | 24 | 24 |
| ak (23 °C) [kJ/m$^2$] | 11,1 | 25,3 | 25,2 | 19 |
| ak (-40 °C) [kJ/m$^2$] | 5,8 | 7,5 | 8,3 | 7,3 |
| Durchstoß [nm] | 5,7 | 12,3 | 29,4 | 21,4 |
| MVR (220/10) [cm$^3$/10 min] | 23,7 | 21,1 | 20,2 | 23,5 |
| E-Modul [MPa] | 2405 | 2367 | 2278 | 2384 |
| Koagulat [%] | 0,06 | 0,08 | 0,02 | 0,06 |

Tabelle 4

| | Erfindungsgemäß | Erfindungsgemäß | Zum Vergleich |
|---|---|---|---|
| Versuch | j | k | k |
| Kautschuk A | $A_4$ | $A_4$ | $A_4$ |
| Verhältnis AN/S in C | 21/79 ($C_8$) | 21/79 ($C_9$) | 21//79 ($C_{v3}$) |
| MAM Gehalt [%] in B | 4,5 | 4,5 | 4,5 |
| Menge [%] von B | 1,5 | 1,5 | 1,5 |
| Elektrolyt | KOH | NaOH | $NaHCO_3$ |
| Menge Elektrolyt [%] | 0,37 | 0,2638 | 0,5542 |
| Initiator | KPS | KPS | KPS |
| pH (nach Pfropfung) | 11,26 | 11,58 | 8,84 |
| TGV von C $d_{50}$ [nm] D50 [nm] | 140 | 141 | 135 |
| AN Gehalt in SAN [%] | 24 | 24 | 24 |
| PB-gehalt (sec.) [%] | 29,1 | 29,2 | 28,3 |
| ak 23°C [kJ/m²] | 23,3 | 23 | 23,1 |
| ak -40°C [kJ/m²] | 7,2 | 7,6 | 8,1 |
| DST 23°C [Nm] | | | |
| MVR 220/10 [ml/10min] | 16,3 | 16,4 | 17,1 |
| Vicat B50 [°C] | 98,3 | 98,3 | 98,5 |
| Koagulat (t) gram | 3,6 | 12,35 | 137,4 |
| Koagulat (%) | 0,11 | 0,39 | 4,29 |

Tabelle 4 Forts.

| | Zum Vergleich | Zum Vergleich | Erfindungs-gemäß | Erfindungs-gemäß | Zum Vergleich | Zum Vergleich |
|---|---|---|---|---|---|---|
| Versuch | k | k | k | k | k | k |
| Kautschuk A | $A_4$ | $A_4$ | $A_4$ | $A_4$ | $A_4$ | $A_4$ |
| Verhältnis AN/S in C | 21/79 ($C_{v4}$) | 21/79 ($C_{v5}$) | 21/79 ($C_{10}$) | 21/79 ($C_{11}$) | 21/79 ($C_{v6}$) | 21//79 ($C_{v7}$) |
| MAM Gehalt [%] in B | 4,5 | 4,5 | 4,5 | 4,5 | 4,5 | 4,5 |
| Menge [%] von B | 1,5 | 1,5 | 2,5 | 2,5 | 2,5 | 2,5 |
| Elektrolyt | KCl | $K_2SO_4$ | KOH | NaOH | $NaHCO_3$ | $K_2SO_4$ |
| Menge Elektrolyt [%] | 0,4906 | 0,5734 | 0,27 | 0,1925 | 0,4044 | 0,4193 |
| Initiator | KPS | KPS | KPS | KPS | KPS | KPS |
| pH (nach Pfropfung) | | | 10,61 | 10,56 | | |
| TGV von C $d_{50}$ [nm] D50 [nm] | | | 324 | 299 | | |
| AN Gehalt in SAN [%] | | | 24 | 24 | | |
| PB-gehalt (sec.) [%] | | | 28,3 | 29,5 | | |
| ak 23°C [kJ/m²] | | | 21,4 | 22,3 | | |
| ak -40°C [kJ/m²] | | | 7,8 | 7,9 | | |
| DST 23°C [Nm] | | | | | | |
| MVR 220/10 [ml/10min] | | | 16,8 | 15,9 | | |
| Vicat B50 [°C] | | | 98,4 | 98,2 | | |
| Koagulat (t) gram | | | 0,8 | 0,8 | | |
| Koagulat (%) | auskoagu-liert | auskoagu-liert | 0,03 | 0,03 | koaguliert | auskoagu-liert |

Tabelle 5

| | Erfindungsgemäß | Zum Vergleich | Zum Vergleich | Zum Vergleich | Zum Vergleich |
|---|---|---|---|---|---|
| Versuch | 1 | 1 | 1 | 1 | 1 |
| Kautschuk A | A5 | A5 | A5 | A5 | A5 |
| Verhältnis AN/S in C | 21/79 ($C_{12}$) | 21/79 ($C_{V8}$) | 21/79 ($C_{V9}$) | 21/79 ($C_{V10}$) | 21/79 ($C_{V11}$) |
| B | $B_1$ | $B_{V1}$ | $B_{V2}$ | $B_{V3}$ | $B_{V4}$ |
| Menge [%] von B | 1,5 | 1,5 | 1,5 | 1,5 | 1,5 |
| Elektrolyt | KOH | KOH | KOH | KOH | KOH |
| Menge Elektrolyt [%] | 0,27 | 0,27 | 0,27 | 0,27 | 0,27 |
| Initiator | KPS | KPS | KPS | KPS | KPS |
| pH (nach Pfropfung) | 10,94 | 11,4 | 10,93 | 10,77 | 10,86 |
| TGV von C $d_{50}$ [nm] D50 [nm] | n.g. | n.g. | n.g. | n.g. | n.g. |
| AN Gehalt in SAN [%] | 24 | 24 | 24 | 24 | 24 |
| PB-gehalt (sec.) [%] | 28,3 | 28,5 | 28,9 | 28,2 | 28,3 |
| ak 23°C [kJ/m²] | 25,5 | 25,1 | 25,5 | 25,2 | 25,1 |
| ak -40°C [kJ/m²] | 5,5 | 5,5 | 5,6 | 5,3 | 5,4 |
| DST 23°C [Nm] | 19,3 | 13,9 | 18,3 | 18,2 | 16,0 |
| MVR 220/10 [ml/10min] | 20,1 | 19,4 | 18,1 | 20,9 | 20,1 |
| Vicat B50 [°C] | 96,3 | 96,2 | 95,7 | 95,9 | 95,8 |
| Koagulat (t) gram | 1,7 | 42,2 | 9,2 | 39,1 | 12,1 |
| Koagulat (%) | 0,05 | 1,32 | 0,29 | 1,22 | 0,38 |

n.g.: nicht gemessen

## Patentansprüche

1. Verfahren zur Agglomerisation mindestens eines in wässriger Phase dispergierten Kautschukes (A) durch Zugabe einer Dispersion mindestens eines Agglomerationspolymerisates (B) in wässriger Phase **dadurch gekennzeich-**

**net, daß** man als B ein Agglomerisationspolymerisat verwendet, das im Wesentlichen keine freien Säuregruppen enthält und die Agglomerisation in Gegenwart mindestens eines basischen Elektrolyten durchführt, wobei als basischer Elektrolyt ein organisches oder anorganisches Hydroxyd eingesetzt wird.

**2.** Verfahren, nach Anspruch 1, **dadurch gekennzeichnet, daß** man als Agglomerisationspolymerisat B ein Copolymerisat aus (bezogen auf B)

b1) 80 bis 99,9 Gew.-% mindestens eines ($C_1$-$C_4$-Alkyl)esters der Acrylsäure und

b2) 0,1 bis 20 Gew.-% eines Acrylamides

einsetzt.

**3.** Verfahren nach den Ansprüchen 1 bis 2, **dadurch gekennzeichnet, daß** man als basischen Elektrolyten KOH verwendet..

**4.** Verfahren nach den Ansprüchen 1 bis 3, **dadurch gekennzeichnet, daß** man als Kautschuk A einen Dienkautschuk aus (bezogen auf A)

a1) 50 bis 100 Gew.-% mindestens eines Diens mit konjugierten Doppelbindungen und

a2) 0 bis 50 Gew.-% von einem oder mehreren weiteren monoethylenisch ungesättigten Monomeren,

einsetzt.

**5.** Verfahren nach den Ansprüchen 1 bis 4, **dadurch gekennzeichnet, daß** man den basischen Elektrolyten in einer Menge im Bereich von 0,01 bis 1,5 Gew.-%, bezogen auf A, einsetzt.

**6.** Verwendung der mittels des Verfahrens gemäß den Ansprüchen 1 bis 5 agglomerierten Kautschuke A zur Herstellung von Pfropfpolymerisaten (C).

**7.** Pfropfpolymerisate C, enthaltend (bezogen auf C)

c1) 30 bis 95 Gew.-% eines der mittels des Verfahrens gemäß den Ansprüchen 1 bis 5 agglomerierten Kautschukes A und

c2) 5 bis 70 Gew.-% einer Pfropfgrundlage.

**8.** Verwendung der Pfropfpolymerisate C gemäß Anspruch 7 zur Herstellung thermoplastischer Formmassen (D).

**9.** Thermoplastische Formmassen D, enthaltend Pfropfpolymerisate C gemäß Anspruch 7.

**10.** Verwendung von thermoplastischen Formmassen D gemäß Anspruch 9 zur Herstellung von Formkörpern, Folien oder Fasern.

## Claims

**1.** A process for the agglomeration of at least one rubber (A), dispersed in an aqueous phase, by the addition of a dispersion of at least one agglomerating polymer (B) in aqueous phase, wherein the agglomerating polymer B used is one containing substantially no free acid groups and the agglomeration is carried out in the presence of at least one basic electrolyte comprising an organic or inorganic hydroxide.

**2.** A process as claimed in claim 1, wherein the agglomerating polymer B used is a copolymer of (based on B):

b1) from 80 to 99.9 % by weight of at least one ($C_1$-$C_4$ alkyl) ester of acrylic acid and

b2) from 0.1 to 20% by weight of acrylamide.

3. A process as claimed in claim 1 or claim 2, wherein the basic electrolyte used is KOH.

4. A process as claimed in any of claims 1 to 3, wherein the rubber A used is a diene rubber of (based on A):

   a1) from 50 to 100 % by weight of at least one diene having conjugated double bonds and

   a2) from 0 to 50% by weight of one or more other monoethylenically unsaturated monomers.

5. A process as claimed in any of claims 1 to 4, wherein the basic electrolyte is used in an amount of from 0.01 to 1.5% by weight based on A.

6. The use of rubbers A agglomerated by the process as claimed in any of claims 1 to 5 for the preparation of graft polymers (C).

7. A graft polymer C containing (based on C):

   c1) from 30 to 95% by weight of rubber A agglomerated by the process as claimed in any of claims 1 to 5 and

   c2) from 5 to 70% by weight of a graft base.

8. The use of a graft polymer C as claimed in claim 7 for the preparation of a thermoplastic molding composition (D).

9. A thermoplastic molding composition D comprising a graft polymer C as claimed in claim 7.

10. The use of a thermoplastic molding composition D as claimed in claim 9 for the preparation of shaped articles, films or fibers.

**Revendications**

1. Procédé pour l'agglomération d'au moins un caoutchouc (A) dispersé dans une phase aqueuse par addition d'une dispersion d'au moins un polymère agglomérant (B) en phase aqueuse, **caractérisé en ce que** l'on utilise en tant que B un polymère agglomérant ne contenant essentiellement pas de groupes acides libres et que l'on entreprend l'agglomération en présence d'au moins un électrolyte basique, en mettant en oeuvre en tant qu'électrolyte basique un hydroxyde organique ou inorganique.

2. Procédé selon la revendication 1, **caractérisé en ce que** l'on met en oeuvre en tant que polymère agglomérant B un copolymère constitué de (par rapport à B)

   b1) de 80 à 99,9% en poids d'au moins un ester alkylique en $C_1$ à $C_4$ de l'acide acrylique et
   b2) de 0,1 à 20% en poids d'un acrylamide.

3. Procédé selon les revendications 1 à 2, **caractérisé en ce que** l'on utilise du KOH en tant qu'électrolyte basique.

4. Procédé selon les revendications 1 à 3, **caractérisé en ce que** l'on met en oeuvre en tant que caoutchouc A un caoutchouc diène constitué de (par rapport à A)

   a1) de 50 à 100% en poids d'au moins un diène comportant des doubles liaisons conjuguées et
   a2) de 0 à 50% en poids d'un ou plusieurs autres monomères monoéthyléniquement insaturés.

5. Procédé selon les revendications 1 à 4, **caractérisé en ce que** l'on met en oeuvre l'électrolyte basique en une quantité de l'ordre de 0,01 à 1,5% en poids, par rapport à A.

6. Utilisation des caoutchoucs agglomérés au moyen du procédé selon les revendications 1 à 5 pour la production de copolymères greffés (C).

7. Copolymères greffés C, contenant (par rapport à C)

c1) de 30 à 95% en poids d'un caoutchouc A aggloméré au moyen du procédé selon les revendications 1 à 5 et
c2) de 5 à 70% en poids d'une base de greffage.

**8.** Utilisation des copolymères greffés C selon la revendication 7 pour la production de masses de moulage thermoplastiques (D).

**9.** Masses de moulage thermoplastiques D contenant des copolymères greffés C selon la revendication 7.

**10.** Utilisation de masses de moulage thermoplastiques D selon la revendication 9 pour la production de pièces moulées, de feuilles ou de fibres.